# EUROPÄISCHE PATENTANMELDUNG

(11) **EP 0 587 233 A2**
(43) Veröffentlichungstag der Anmeldung: **16.03.1994**
(21) Anmeldenummer: 93202548.9
(22) Anmeldetag: 01.09.1993
(51) Int. Cl.: G11B 15/675, G11B 15/10

(54) **Magnetbandkassettengerät mit einem Laufwerk für Magnetbandkassetten (Lademechanismus)**

(30) Priorität: 09.09.1992 DE 4230129
(71) Anmelder: Philips Patentverwaltung GmbH, 22335 Hamburg (DE); Philips Electronics N.V., 5621 BA Eindhoven (NL)
(72) Erfinder: Kunze, Norbert, D-20097 Hamburg (DE); Müller, Dieter, D-20097 Hamburg (DE)
(74) Vertreter: von Laue, Hanns-Ulrich, Dipl.-Ing.

(57) **Zusammenfassung**

Die Erfindung bezieht sich auf
ein Magnetbandkassettengerät mit einem Laufwerk, welches dem Spielen von Magnetbandkassetten (2) dient, mit
- einem Kassettenschacht (1), der aus einem U-förmigen Formteil mit aufeinander zulaufenden Schenkelplatten (3, 4) besteht und um eine zur hinteren Längsseite der Kassette (2) parallele Achse (6) schwenkbar ist, mit dem eine im Kassettenschacht (1) befindliche Magnetbandkassette (2) in eine Auswerfstellung anhebbar und in eine Spielstellung absenkbar ist, in der die Wickelkerne der Magnetbandkassette (2) auf die Wickelteller aufgesetzt sind,
- einem Auswurfhebel (16), mit dem das Einziehen und das Auswerfen einer Magnetbandkassette (2) unter der Wirkung einer Auswurf(Eject)-Stange (9) vornehmbar ist über einen am freien Armende des Auswurfhebels (16) angreifenden Kassettenmitnehmer (17), der in ein Wickelloch (2a) einer Kassette (2) einfallen kann, wobei der Auswurfhebel (16) in einem Lager (1a) schwenkbar ist, das seitlich des Einschubweges der Magnetbandkassette (2) zwischen deren ausgeschobener und deren eingeschobener Stellung vorgesehen ist,
wobei an der Ejectstange (9) ein Koppelhebel (12) gelagert ist,
- der mittels einer an ihm auf der zum Chassis gelegenen Seite vorgesehenen Verzahnung (12b) mit einer chassisfesten Verzahnung (15) kämmt,
- der sich bei Ejectstangenbewegungen auf dieser Verzahnung derart abwälzt,
- daß durch die daraus resultierende Drehbewegung des Koppelhebels (12) eine Übersetzung der Hubbewegung der Ejectstange (9) erfolgt und
- daß am Koppelhebel (12) ein verstellend auf den Auswurfhebel (16) einwirkendes Verbindungsglied (12d) vorgesehen ist, das sich deutlich mehr in Verschieberichtung der Ejectstange (9) bewegt als die Ejectstange (9) selbst.

## Beschreibung

Die Erfindung bezieht sich auf ein Magnetbandkassettengerät mit einem Laufwerk, welches dem Spielen von Magnetbandkassetten dient, mit
- einem Kassettenschacht, der aus einem U-förmigen Formteil mit aufeinander zu laufenden Schenkelplatten besteht und um eine zur hinteren Längsseite der Kassette parallele Achse schwenkbar ist, mit dem eine im Kassettenschacht befindliche Magnetbandkassette in eine Auswerfstellung anhebbar und in eine Spielstellung absenkbar ist, in der die Wickelkerne der Magnetbandkasette auf die Wickelteller abgesetzt sind,
- einem Auswurfhebel, mit dem das Einziehen und das Auswerfen einer Magnetbandkassette unter der Wirkung einer Auswurf(Eject)-Stange vornehmbar ist über einen am freien Armende des Auswurfhebels angreifenden Kassettenmitnehmer, der in ein Wickelloch einer Kassette einfallen kann, wobei der Auswurfhebel in einem Lager schwenkbar ist, das seitlich des Einschubweges der Magnetbandkassette zwischen deren ausgeschobener und deren eingeschobener Stellung vorgesehen ist.

Aus der DE 38 32 672 A1 (PHD 88-183) ist ein Magnetbandkassettengerat mit einem Laufwerk für Magnetbandkassetten bekannt. Das Laufwerk weist einen Kassettenschacht auf, der aus einem U-förmigen Blechformteil besteht, in das eine Magnetbandkassette einschiebbar ist. Der Kassettenschacht ist anhebbar in eine Auswurfstellung und absenkbar in eine Spielstellung. In der Spielstellung sind die Wickelkerne der Magnetbandkassette auf Wickelteller des Laufwerkes aufgesetzt. Es ist ein Auswurfhebel vorgesehen, mit dem das Auswerfen der Magnetbandkassette unter der Wirkung einer Auswurf(Eject)-Stange vornehmbar ist. Der Auswurfhebel greift dazu mit seinem freien Armende an einen Kassettenmitnehmer an, der in ein Wickelloch der Magnetbandkassette einfallen kann. Der Auswurfhebel ist um eine Achse schwenkbar, die seitlich des Einschubweges der Magnetbandkassette zwischen deren ausgeschobener und eingeschobener Stellung vorgesehen ist.

Die Einschubbewegung der Ejectstange wird direkt über eine Steuerkontur am Auswurfhebel in eine Drehbewegung des Auswurfhebels umgesetzt. Der Verschiebeweg der Ejectstange ist dabei relativ lang. Bei einem kleinen Hub der Ejectstange wurde sich auch die Drehbewegung des Auswurfhebels verkleinern. Außerdem würde ein kleiner Hub dem Vorschalten eine Stand-by-Funktion entgegenstehen, während der der Lift- und Auswurfmechanismus noch nicht betätigt werden darf. Die Magnetbandkassette muß in der Stand-by-Stellung in der abgesenkten Spielposition verbleiben.

Aus der DE 40 32 641 C1 (PHD 90-179) ist es weiterhin noch bekannt, die Schenkelplatten des Kassettenschachtes von deren Verbindungswand her aufeinander zu geneigt verlaufen zu lassen. Der Kassettenschacht ist in diesem Fall um eine zur hinteren Längsseite der Kassette parallele Achse schwenkbar.

Es ist Aufgabe der Erfindung, ein Magnetbandkassettengerät mit einem Laufwerk der eingangs erwähnten Art zu schaffen, bei dem die seitliche Ausladung des Stellmechanismus für den Auswurfhebel klein und der Aufwand an Bauteilen gering ist, wobei außerdem der Hub der Ejectstange trotz eines geringen Einschubweges für die eigentliche Ejectfunktion einen vorgelagerten kleinen Stand-by-Hub ermöglicht.

Die gestellte Aufgabe ist erfindungsgemäß dadurch gelöst, daß an der Ejectstange ein Koppelhebel gelagert ist,
- der mittels einer an ihm auf der zum Chassisgelegenen Seite vorgesehenen Verzahnung mit einer chassisfesten Verzahnung kämmt,
- der sich bei Ejectstangenbewegungen auf einer Verzahnung derart abwälzt,
- daß durch die daraus resultierende Drehbewegung des Koppelhebels eine Übersetzung der Hubbewegung der Ejectstange erfolgt und
- daß am Koppelhebel ein verstellend auf den Auswurfhebel einwirkendes Verbindungsglied vorgesehen ist, das sich deutlich mehr in Verschieberichtung als die Ejectstange selbst bewegt.

Damit ist der zum Ausschieben der Magnetbandkassette benötigte Hub der Ejectstange reduziert und die Drehbewegung des Auswerfhebels größer als es durch eine reine Übertragung über die Ejectstange der Fall wäre. Eine Stand-by-Funktion wird möglich.

Mit dieser Konstruktion wird eine außerordentlich schmale Bauweise erreicht, die praktisch nur der Gesamtbreite von Ejectstange und Koppelhebel zu entsprechen braucht. Der konstruktive Aufwand ist gering, weil die chassisseitige Verzahnung an das Chassis angespritzt sein kann und außer der Auswurfhebellagerung nur noch der Koppelhebel benötigt wird, der die Bewegungsübertragung herbeiführt.

Nach einer weiteren Ausgestaltung der Erfindung ist vorgesehen, daß der Koppelhebel um eine Achse drehbar ist, die senkrecht zur Verstellrichtung der Ejectstange verläuft und in eine zur Fübrungsebene der Magnetbandkassette parallele Ebene fällt. Auf diese Weise wird die kürzeste räumliche Ausdehnung außerhalb des Kassettenschachtes erreicht.

Nach einer weiteren Ausgestaltung der Erfindung ist vorgesehen, daß der Koppelhebel auf der seiner Verzahnung gegenüberliegenden Seite einen Ansatz aufweist, der in einer Steuerkontur des Auswurfhebels gleitet. Ansatz und Steuerkontur gestatten eine Anpassung der Einzugs- und Ausschiebebewegung nach Maßgabe der bestehenden Anforderungen.

Nach einer weiteren Ausgestaltung der Erfindung ist vorgesehen, daß der Koppelhebel und die Ejectstange mittels einer Ejectfeder derart verspannt sind, daß sich die Kraftrichtung auf den Koppelhebel in Abhängigkeit von dessen Drehwinkel und der Stellung der Ejectstange gegenüber dem Kassettenschacht relativ zur Ejectstange zwischen der Auswurfstellung der Ejectstange und deren Stellung beim Spielbetrieb umkehrt. Durch die Drehbewegung des Koppelhebels ändert sich aufgrund dieser Übertotpunktkonstruktion die Richtung des auf den Koppelhebel von der Ejectfeder herrührenden Drehmomentes so, daß die Kraft auf die Ejectstange über die Verzahnung ihre Richtung von Ausschieben nach Einziehen und umgekehrt ändert. Dies bedeutet, daß der Mechanismus, bestehend aus der Ejectstange, dem Koppelhebel und der Ejectfeder, die Ejectstange kraftschlüssig in die beiden Endstellungen bewegt, in der sie selbsttätig verriegelt wird. Es wird damit für die eingeschobene verriegelte Position kein Überhub benötigt, wie er sonst bei Klinkenmechanismen üblich ist.

Eine weitere Ausgestaltung der Erfindung ist gekennzeichnet durch einen Lifthebel, der drehbar über eine Welle mit dem Kassettenschacht verbunden ist und der der Abstützung der Kassettenrückseite mit seinen Auflagen dient.

Nach einer weiteren Ausgestaltung der Erfindung ist vorgesehen, daß der an dem Kassettenschacht gelagerte Lifthebel an seinem freien Ende die Auflage für die Kassettenrückseite aufweist, daß sich eine Stütznase des Lifthebels auf einem Stützblock des Chassis abstützt, der eine Steuerkontur aufweist, auf der die Stütznase des Lifthebels beim Verschwenken des Kassettenschachtes abgleitet, und daß die Auflage beim Ausfahren der Ejectstange von dem schwenkenden Kassettenschacht über die Stütznase, die der Steuerkontur folgt, abgesenkt wird, womit die Kassettenrückseite in die Spielstellung absinken kann, während gleichzeitig die Kassettenvorderseite mit dem verschwenkenden Kassettenschacht in die Spielstellung absinkt.

Die Erfindung wird anhand der Zeichnung näher erläutert. Es zeigen:
Fig. 1 einen Kassettenschacht eines Laufwerkes eines Magnetbandkassettengerätes in schaubildlicher Darstellung mit einer Ejectstange, einem Auswurfhebel, einem Lifthebel und einem Kassettenmitnehmer,
Fig. 2 den Kassettenschacht von der Seite der Ejectstange aus gesehen mit dem Koppelhebel im Zusammenwirken mit einer chassisfesten Verzahnung, der Ejectstange, der Ejectfeder und dem Auswurfhebel,
Fig. 3 eine Draufsicht auf den Kassettenschacht und die mit ihm zusammenwirkenden Teile bei in den Kassettenschacht eingesetzter Kassette in der Ejectstellung.

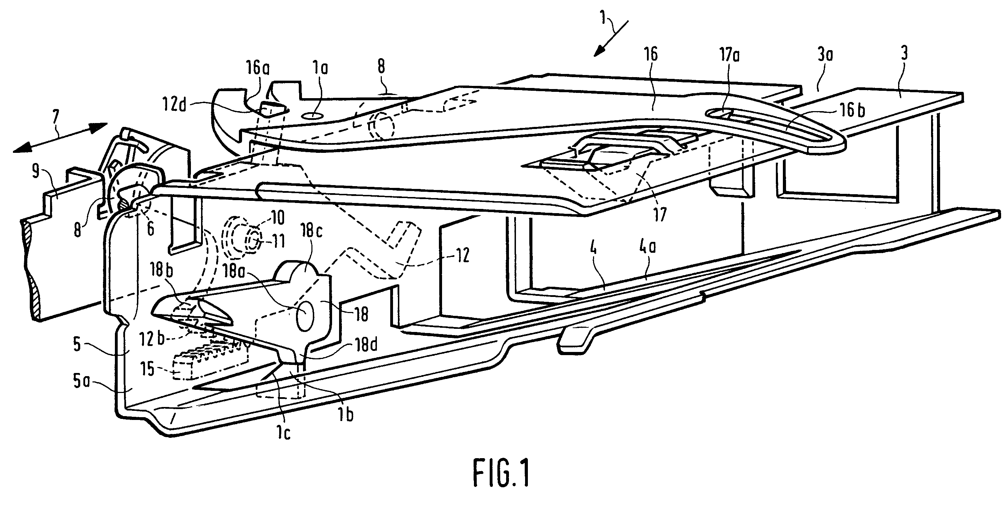

Ein in Fig. 1 schaubildlich dargestellter Kassettenschacht 1 eines Laufwerkes für Magnetbandkassettengeräte, in den eine Magnetbandkassette 2 einschiebbar ist, besteht aus einem U-förmigen Blechformteil. Der Kassettenschacht 1 hat eine obere Schenkelplatte 3, eine untere Schenkelplatte 4 und eine Rückwand 5, welche die Schenkelplatten 3 und 4 verbindet. Die Schenkelplatte 3 ist rechtwinklig von der Rückwand 5 abgewinkelt. Die Schenkelplatte 4 schließt mit der Rückwand 5 einen spitzen Winkel ein. Damit laufen die Schenkelplatten 3 und 4 aufeinander zu. Der Kassettenschacht 1 ist um eine Achse 6 schwenkbar, die parallel zur Einschubrichtung 7 der Kassette 2 im Bereich von deren Rückwand 5 vorgesehen ist. Der Kassettenschacht 1 ist mit Lageraugen 8 versehen, durch die die Achse 6 verläuft. In der Auswerfstellung verläuft die obere Schenkelplatte 3 in einer horizontalen Ebene. In der Spielstellung verläuft die untere Schenkelplatte 4 in einer horizontalen Ebene.

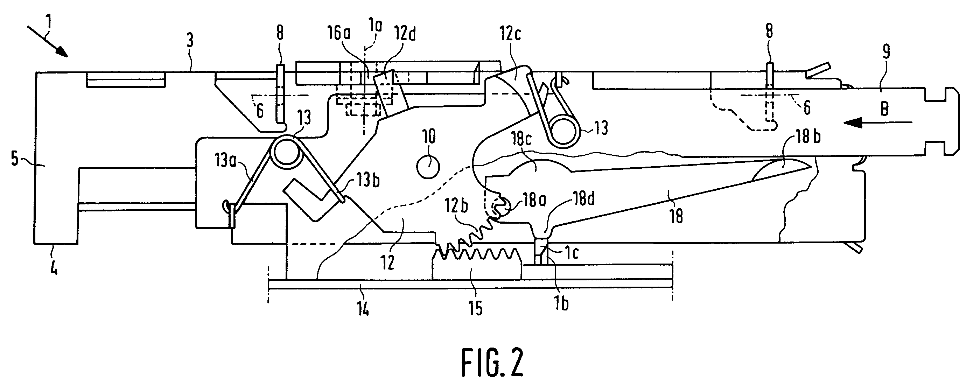

Dem Verschwenken des Kassettenschachtes 1 sowie dem Einziehen und dem Auswerfen einer abzuspielenden oder abgespielten Magnetbandkassette 2 dient eine Ejectstange 9, die in Richtung des Kassettenschachtes 1 zum Auswerfen der Magnetbandkassette 2 einschiebbar ist und die beim Einschieben einer Magnetbandkassette in der entgegengesetzten Richtung ausfährt. An der Ejectstange ist mittels eines Lagers 10 ein um eine Achse 11 verdrehbarer Koppelhebel 12 gelagert. Die Achse 11 des Koppelhebels verläuft senkrecht zur Verstellrichtung der Ejectstange 9 und fällt in eine zur Führungsebene der Magnetbandkassette 2 parallele Ebene. Bei in Ejectstellung stehendem Kassettenschacht 1 liegen Rückwand 5 und Koppelhebel 12 in parellelen Ebenen. Der Koppelhebel 12 und die Ejectstange 9 sind mittels einer in Fig. 2 dargestellten Ejectfeder 13 miteinander verspannt. Die Ejectfeder 13 ist als Übertotpunktfeder ausgelegt und greift mit einem Schenkel 13a an der Ejectstange 9 und mit dem anderen Schenkel 13b an dem Koppelhebel 12 an. Die Verspannung zwischen Ejectstange 9 und Koppelhebel 12 ist derart ausgewählt, daß sich die Kraftrichtung auf den Koppelhebel 12 in Abhängigkeit von dessen Drehwinkel relativ zur Ejectstange 9 ändert durch das Überschreiten eines Übertotpunktes.

Am Chassis 14 des Laufwerkes ist ortsfest eine Verzahnung 15 vorgesehen, die mit einer Verzahnung 12b des Koppelhebels 12 kämmt. Damit arbeiten die Verzahnungen 12b des Koppelhebels 12 und 15 des Chassis 14 derart zusammen, daß bei einer Verschiebung der Ejectstange 9 und des mitverschobenen Koppelhebels 12 sich dieser auf der Verzahnung 15 abwälzt und somit infolge der translatorischen Bewegung eine Rotation erfährt. Durch die Rotation des Koppelhebels 12 ändert sich die Richtung des auf ihn von der Ejectfeder 13 ausgeübten Drehmomentes so, daß die Kraft auf die Ejectstange 9 über die Verzahnung 12b ihre Richtung von ausschiebend zu einziehend ändert. Dies bedeutet, daß der Mechanismus, bestehend aus der Ejectstange 9, dem Koppelhebel 12 und der Ejectfeder 13, kraftschlüssig in die beiden Endstellungen der Ejectstange bewegt wird und sich dabei mittels Federkraft selbsttätig verriegelt. Es wird außerdem für die eingeschobene verriegelte Position kein Überhub benötigt, wie er sonst bei Klinkenmechanismen üblich ist.

Der Koppelhebel 12 trägt auf der der Verzahnung 12b gegenüberliegenden Seite 12c einen Ansatz 12d. Dieser Ansatz 12d wirkt mit einer Steuerkontur 16a eines Auswurfhebels 16 zusammen. Der Auswurfhebel 16 ist nahe der Rückwand 5 des Kassettenschachtes 1, jedoch außerhalb desselben, in einem Lager 1a im Kassettenschacht 1 verschwenkbar. Bei Bewegungen der Ejectstange 9 bewegt sich der Ansatz 12d in Richtung des Pfeiles 7 und gleitet in der Steuerkontur 16a des Auswurfhebels 16 ab. Dadurch wird der Auswurfhebel 16 bei der kombinierten Rotations- und Verschiebebewegung des Koppelhebels 12 um sein Lager 1a im Kassettenschacht 1 so verdreht, daß beim Einschieben der Ejectstange 9 zum Auswerfen der Kassette 2 ein Kassettenmitnehmer 17 vom Auswurfhebel 16 in Ausschubrichtung verschoben wird. Umgekehrt wird der Kassettenmitnehmer 17 beim Einschubvorgang einer Kassette 2 und dem Ausfahren der Ejectstange 9 in Einzugsrichtung verschoben.

Der Kassettenmitnehmer 17 ist dazu in einem Schlitz 3a der oberen Schenkelplatte 3 in Längsrichtung, d. h. in Richtung des Pfeiles 7, geführt. Der Kassettenmitnehmer 17 weist einen Mitnehmerstift 17a auf, der durch ein Langloch 16b des Auswurfhebels 16 hindurchgreift. Auf diese Weise erfolgt eine Kopplung zwischen dem Auswurfhebel 16 und dem Kassettenmitnehmer 17.

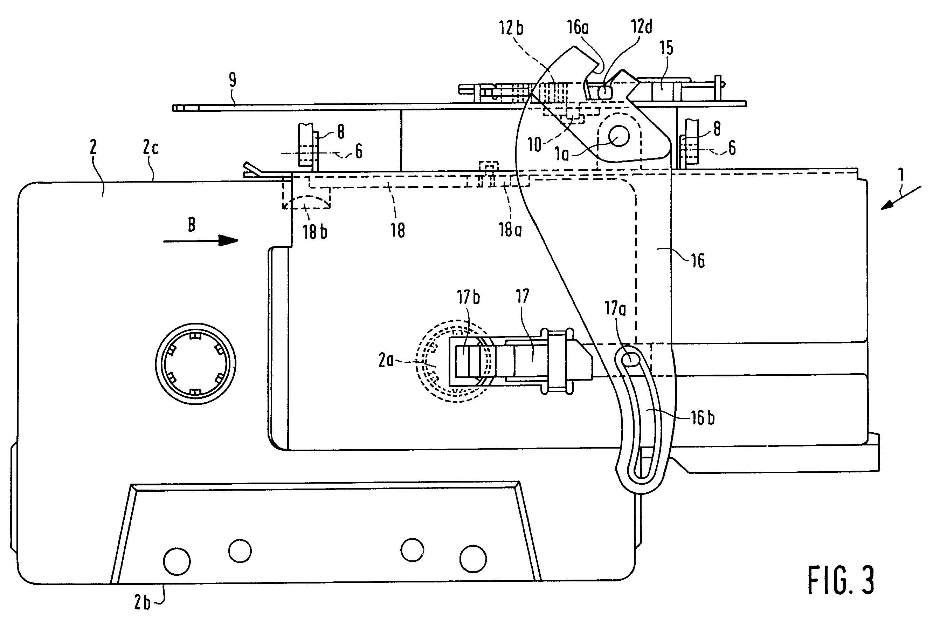

Wie Fig. 3 zeigt, weist der Kassettenmitnehmer 17 ein freies federndes Ende 17b auf, das in ein Wickelloch 2a der Magnetbandkassette einfallen kann.

Fig. 1 zeigt schaubildlich nahe der Rückwand einen Lifthebel 18. Dieser Lifthebel 18 ist über eine Achse 18a drehgelenkig mit dem Kassettenschacht 1 verbunden. Der Lifthebel 18 hat an seinem freien Ende eine Auflage 18b, oberhalb der Achse 18a eine weitere Auflage 18c und unterhalb der Welle 18a eine Stütznase 18d. Die Stütznase 18d wirkt mit einem Stützblock 1b im Chassis 14 zusammen, der eine Stellkontur 1c aufweist.

Wenn eine Magnetbandkassette 2 von Hand in den Kassettenschacht 1 eingeschoben wird, dann liegt die Kassettenvorderseite 2b an der Vorderseite 4a der unteren Schenkelplatte auf. Die Kassettenrückseite 2c liegt demgegenüber auf den Auflagen 18b und 18c auf. Fährt nun die Kassette 2 beim Einschieben über die in Fig. 3 dargestellte Stellung in Richtung eines Pfeiles A ein, dann fährt die Ejectstange 9 in Gegenrichtung aus. Der untere Teil 5a der Rückwand schwenkt nach hinten, was zur Folge hat, daß die Stütznase 18d auf der Stellkontur 1c abläuft und sich die Auflage 18b absenkt und die Auflage 18c mit verschwenkt. Der Hebe- und Senkweg der Kassettenrückseite 2c ist so bemessen, daß die Magnetbandkassette 2 im Kassettenschacht 1 immer in einer annähernd horizontalen Ebene liegt. Sowohl die Kassettenvorderseite 2b als auch die Kassettenrückseite 2c haben also ständig eine ausreichende Unterstützung.

## Patentansprüche

1. Magnetbandkassettengerät mit einem Laufwerk, welches dem Spielen von Magnetbandkassetten (2) dient, mit
- einem Kassettenschacht (1), der aus einem U-förmigen Formteil mit aufeinander zulaufenden Schenkelplatten (3, 4) besteht und um eine zur hinteren Längsseite der Kassette (2) parallele Achse (6) schwenkbar ist, mit dem eine im Kassettenschacht (1) befindliche Magnetbandkassette (2) in eine Auswerfstellung anhebbar und in eine Spielstellung absenkbar ist, in der die Wickelkerne der Magnetbandkassette (2) auf die Wickelteller aufgesetzt sind,
- einem Auswurfhebel (16), mit dem das Einziehen und das Auswerfen einer Magnetbandkassette (2) unter der Wirkung einer Auswurf(Eject)-Stange (9) vornehmbar ist über einen am freien Armende des Auswurfhebels (16) angreifenden Kassettenmitnehmer (17), der in ein Wickelloch (2a) einer Kassette (2) einfallen kann, wobei der Auswurfhebel (16) in einem Lager (1a) schwenkbar ist, das seitlich des Einschubweges der Magnetbandkassette (2) zwischen deren ausgeschobener und deren eingeschobener Stellung vorgesehen ist,
dadurch gekennzeichnet, daß an der Ejectstange (9) ein Koppelhebel (12) gelagert ist,
- der mittels einer an ihm auf der zum Chassis gelegenen Seite vorgesehenen Verzahnung (12b) mit einer chassisfesten Verzahnung (15) kämmt,
- der sich bei Ejectstangenbewegungen auf dieser Verzahnung derart abwälzt,
- daß durch die daraus resultierende Drehbewegung des Koppelhebels (12) eine Übersetzung der Hubbewegung der Ejectstange (9) erfolgt und
- daß am Koppelhebel (12) ein verstellend auf den Auswurfhebel (16) einwirkendes Verbindungsglied (12d) vorgesehen ist, das sich deutlich mehr in Verschieberichtung der Ejectstange (9) bewegt als die Ejectstange (9) selbst.

2. Magnetbandkassettengerät nach Anspruch 1, dadurch Gekennzeichnet, daß der Koppelhebel (12) um eine Achse (11) drehbar ist, die senkrecht zur Verstellrichtung der Ejectstange (9) verläuft und in eine zur Führungsebene der Magnetbandkassette (2) parallele Ebene fällt.

3. Magnetbandkassettengerät nach Anspruch 1 oder 2, dadurch Gekennzeichnet, daß der Koppelhebel (12) auf der seiner Verzahnung (12b) gegenüberliegenden Seite (12c) einen als Verbindungsglied wirkenden Ansatz (12d) aufweist, der in einer Steuerkontur (16a) des Auswurfhebels (16) gleitet.

4. Magnetbandkassettengerät nach Anspruch 1, dadurch gekennzeichnet, daß der Koppelhebel (12) und die Ejectstange (9) mittels einer Ejectfeder (13) derart verspannt sind, daß sich die Kraftrichtung auf den Koppelhebel (12) in Abhängigkeit von dessen Drehwinkel und der Stellung der Ejectstange (9) gegenüber dem Kassettenschacht (1) umkehrt.

5. Magnetbandkassettengerät nach einem der Ansprüche 1 bis 4, gekennzeichnet durch einen Lifthebel (18), der drehbar über eine Welle (18a) mit dem Kassettenschacht (1) verbunden ist und der der Abstützung der Kassettenrückseite (2c) mit seinen Auflagen (18b und 18c) dient.

6. Magnetbandkassettengerät nach einem der Ansprüche 1 bis 5, dadurch gekennzeichnet, daß der an dem Kassettenschacht (1) gelagerte Lifthebel (18) an seinem freien Ende die Auflage (18b) für die Kassettenrückseite (2c) aufweist, daß sich eine Stütznase (18d) des Lifthebels (18) auf einem Stützblock (1c) des Chassis abstützt, der eine Steuerkontur (1c) aufweist, auf der die Stütznase (18d) des Lifthebels (18) beim Verschwenken des Kassettenschachtes abgleitet, und daß die Auflage (18b) beim Ausfahren der Ejectstange (9) von dem schwenkenden Kassettenschacht (1) über die Stütznase (18d), die der Steuerkontur (1c) folgt, abgesenkt wird, womit die Kassettenrückseite (2c) in die Spielstellung absinken kann, während gleichzeitig die Kassettenvorderseite (2b) mit dem verschwenkenden Kassettenschacht (1) in die Spielstellung absinkt.
